# EUROPÄISCHE PATENTANMELDUNG

(11) **EP 1 096 765 A1**
(43) Veröffentlichungstag der Anmeldung: **02.05.2001**
(21) Anmeldenummer: 99120869.5
(22) Anmeldetag: 26.10.1999
(51) Int. Cl.: H04M 3/22

(54) **System und Verfahren zur einheitlichen Netzwerkverwaltung**

(71) Anmelder: SIEMENS AKTIENGESELLSCHAFT, 80333 München (DE)
(72) Erfinder: Romanski, Irena, Dr., 82544 Egling (DE)

(57) **Zusammenfassung**

Vermittlungsstellen mit unterschiedlichen Kommandosprachen sollen durch den Betreiber an einem übergeordnetem Management-Tool in einfacher Weise und einheitlich zentral verwaltet werden können. Dazu werden Funktions-Profile vorgesehen, die durch den Betreiber aufgerufen werden können, und die durch Profileditoren in die jeweilige Kommandosprache (MML, Q3), die für die herstellerspezifischen Vermittlungsstellen benötigt wird, umgesetzt werden.

## Beschreibung

Die vorliegende Erfindung bezieht sich auf ein Verfahren und ein System zur Verwaltung wenigstens einer Telekommunikations-Vermittlungsstelle, deren Funktion gemäß einer vorbestimmten Syntax (Kommandosprache) programmierbar ist.

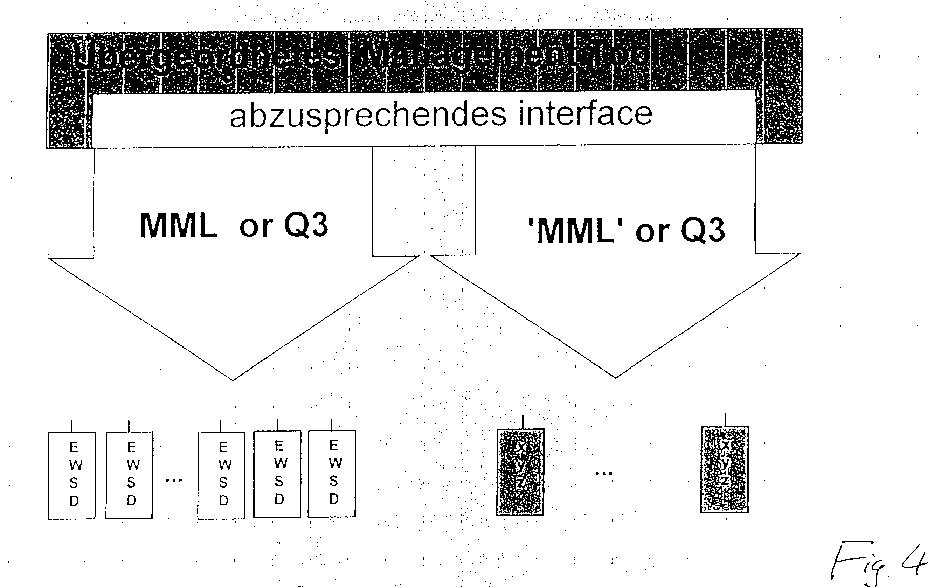

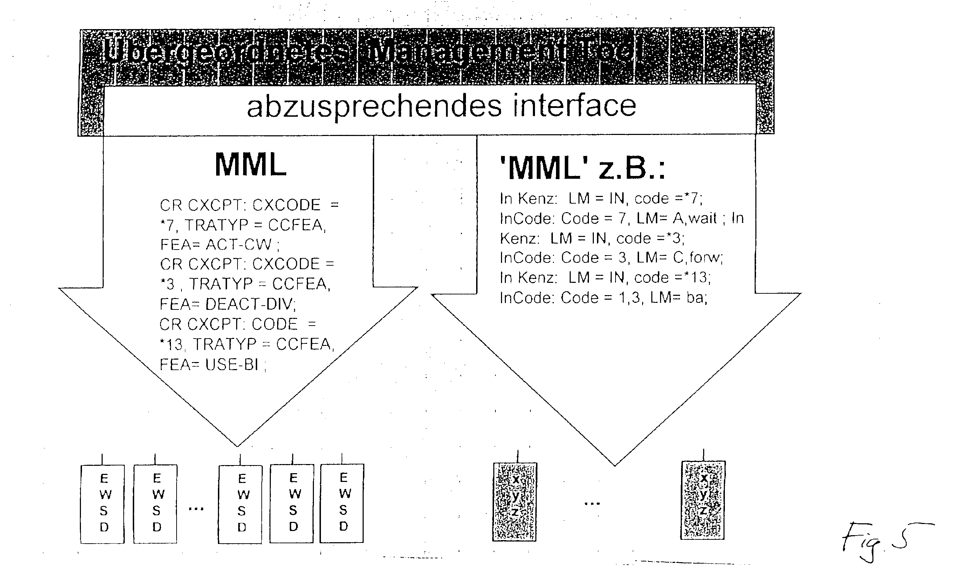

Die Betreiber von Vermittlungsnetzen benutzen üblicherweise (digitale) Vermittlungsstellen, die auch von unterschiedlichen Herstellern sein können. Die Verwaltung (Administration) dieser Vermittlungsstellen erfolgt dabei direkt durch die Bedienterminals der verschiedenen Hersteller, wodurch pro Hersteller muß mindestens ein Bedienterminal zur Verfügung stehen. Wie in Figur 4 und Figur 5 dargestellt werden von diesen unterschiedlichen Bedienterminals Man-Machine-Language (MML) Kommandos der jeweiligen herstellerabhängigen Syntax (siehe insbesondere Figur 5) an die unterschiedlichen Vermittlungsstellen (Elektronisches Wählsystem digital, EWSD) geschickt.

Eine Koordinierung von Funktionen, die für verschiedene Hersteller gleich sein sollen, ist hier über ein gemeinsames System gemäß dem Stand der Technik nur möglich, wenn die Schnittstelle zu den Vermittlungsstellen mittels Q3 programmiert sind. Die Q-Schnittstellen sind Beispiele für sogenannte TMN (Telecommunications Management Network)-Schnittstellen, die durch einen Protokollstapel und ein Management-Informationsmodell am Referenzpunkt beschrieben werden, der durch die Schnittstelle implementiert werden soll. Die Protokolle für TMN-Schnittstellen Q3 sind in den ITU-T Empfehlungen Q.811 und Q.812 gemäß den sieben Schichten des OSI-Referenzmodells definiert. Dabei werden verschiedene Optionen angeboten, aus denen die für die jeweilige Anwendung passende ausgewählt werden kann.

Allgemein erfolgt die Verarbeitung und Verabschiedung von TMN-Standards in internationalen Organisationen wie ITU-T (International Telecommunication Union - Telecommunication Sector) etc. Grundgedanke der TMN-Philosophie ist es, eine Modularisierung des Managements von Netzen durch die Standardisierung von offenen Management-Schnittstellen zu erreichen, die die Interoperabilität von Managementsystemen verschiedener Hersteller untereinander und mit Netzelementen verschiedener Hersteller erlaubt. Die Normierung erfordert indessen erfahrungsgemäß langwierige Absprachen für jede einzelne Teilfunktion. Die Schnittstellenabsprache muß hier bezüglich der Schnittstelle zu den Vermittlungsstellen (MML) erfolgen und bedingt daher eine große Menge an Detail-Absprachen.

Zusätzlich stellt sich das Problem, daß die Q3-Normierung von Verwaltungsobjekten unterschiedlicher Hersteller nur für einen geringen Teilbereich der möglichen Administrations(Verwaltungs)-Objekte existiert (die Standardisierung stützt sich üblicherweise auf objektorientierte Software-Entwicklungstechniken).

Liegt für einen Funktionskomplex keine Normierung vor, kann eine übergreifende Koordinierung nur erfolgen, wenn die Kommandosyntax so wie jede Teilfunktion von allen Herstellern bekannt ist und im Koordinierungs-PC des Betreibers somit dieselbe Funktion mehrfach, das heißt je einmal pro Hersteller, angelegt ist.

Ausgehend von diesem Stand der Technik ist es Aufgabe der vorliegenden Erfindung, eine Technik zur einfacheren Verwaltung insbesondere von mehreren Telekommunikations-Vermittlungsstellen mit unterschiedlicher Kommandosprache (Syntax) bereitzustellen.

Diese Aufgabe wird erfindungsgemäß durch die Merkmale der unabhängigen Ansprüche gelöst. Die abhängigen Ansprüche bilden den zentralen Gedanken der Erfindung in besonders vorteilhafter Weise weiter.

Gemäß einem Aspekt der Erfindung ist also ein Verfahren zur Verwaltung wenigstens einer Telekommunikations-Vermittlungsstelle vorgesehen, wobei die Funktion der Telekommunikations-Vermittlungsstelle gemäß einer vorbestimmten Kommandosprache (Syntax) programmierbar ist. Es werden Verwaltungsdaten in ein Funktionsprofil eines Bedienterminals eingegeben, wobei die Verwaltungsdaten wenigstens eine Funktion der Vermittlungsstelle anweisen. Die Verwaltungsdaten des Funktionsprofils werden in einem Profileditor in die Syntax der Vermittlungsstelle umgesetzt. Somit wird die entsprechende Funktion der Vermittlungsstelle gemäß den Verwaltungsdaten programmiert.

Der Profileditor kann insbesondere in einem Management-System der Vermittlungsstelle vorgesehen (abgespeichert) sein.

Mehrere Vermittlungsstellen mit jeweils unterschiedlicher Syntax können somit durch ein zentrales Bedienterminal einheitlich verwaltet werden.

Zwischen dem Bedienterminal und dem Profileditor besteht eine Schnittstellenabsprache bezüglich Adressparametern und Profilnamen.

Die Eingabe von Verwaltungsdaten kann jeweils mehrere Funktionen der Vermittlungsstelle beeinflussen.

Gemäß einem weiteren Aspekt der vorliegenden Erfindung ist ein System zur Verwaltung wenigstens einer Telekommunikations-Vermittlungsstelle vorgesehen, deren Funktion gemäß einer vorbestimmten Syntax programmierbar ist. Das System weist ein Bedienterminal zur Eingabe von Verwaltungsdaten auf, die mittels eines Funktions-Profils wenigstens eine Funktion der Vermittlungsstelle anweisen können. Es ist ein Profileditor zum Umsetzen der Verwaltungsdaten des Funktions-Profils in die Syntax einer dem Profileditor zugeordneten Vermittlungsstelle vorgesehen. Somit kann wenigstens eine Funktion der Vermittlungsstelle entsprechend den Verwaltungsdaten programmiert werden.

Der Profileditor kann insbesondere in der Vermittlungsstelle vorgesehen sein.

Einem zentralen Bedienterminal können mehrere Vermittlungsstellen mit jeweils unterschiedlicher Syntax zugeordnet sein, wobei die mehreren Vermittlungsstellen durch das zentrale Bedienterminal einheitlich verwaltet werden können.

Zwischen dem Bedienterminal und dem Profileditor kann eine Schnittstelle zur Übergabe von Adressparametern und Profilnamen vorgesehen sein.

In dem Profileditor können mehrere auswählbare Profile abgespeichert sein, die jeweils durch eine Gruppe vorbestimmter Funktionen definiert sind und durch die Verwaltungsdaten gezielt aufrufbar sind.

Die Funktionen können beispielsweise teilnehmerbezogene ergänzende Dienste und Leistungsmerkmale enthalten.

Weitere Vorteile, Merkmale und Eigenschaften der vorliegenden Erfindung werden aus der folgenden Beschreibung von einem Ausführungsbeispiel und bezugnehmend auf die begleitenden Figuren der Zeichnungen näher ersichtlich.
Figur 1 zeigt eine schematische Ansicht der Verwaltung von Vermittlungsstellen (EWSD) mittels Funktions-Profilen,
Figur 2 zeigt eine detailliertere Ansicht von Figur 1, in der die Funktion eines Profileditors gemäß der vorliegenden Erfindung verdeutlicht wird,
Figur 3 zeigt eine weitere detaillierte Ansicht von Figur 1, die weiterhin zur Verdeutlichung der Funktion eines erfindungsgemäßen Profileditors dient,
Figur 4 zeigt die Verwaltung von Vermittlungsstellen verschiedener Hersteller mittels Mensch-Maschinen-Sprache (MML, Man-Machine-Language) oder dem eingangs Protokoll Q3, wie es aus dem Stand der Technik bekannt ist, und
Figur 5 verdeutlicht die verschiedenen Kommandosprachen, die für Vermittlungsstellen verschiedener Hersteller regelmäßig notwendig sind.

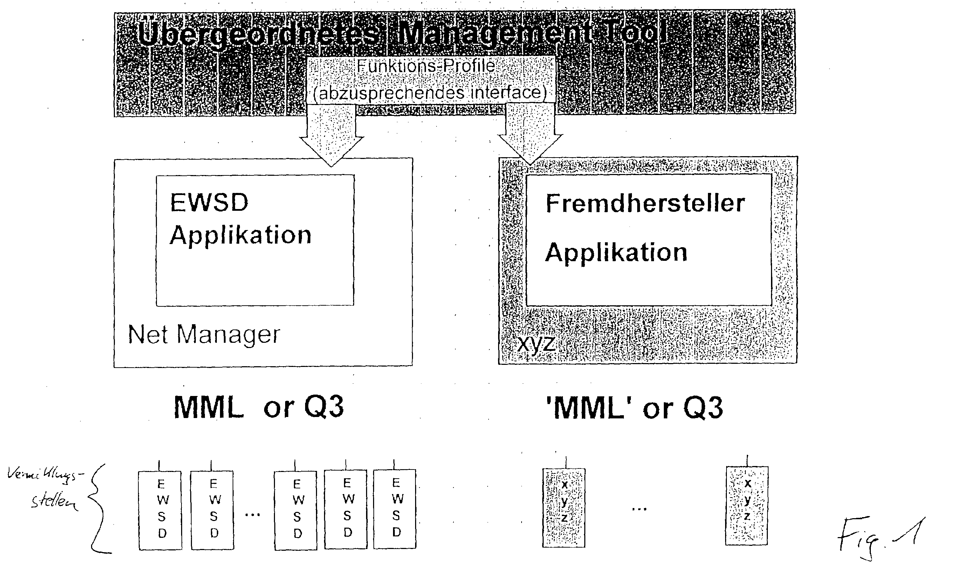

Figur 1 zeigt allgemein die Verwendung von Funktions-Profilen zur Verwaltung von verschiedenen Telekommunikations-Vermittlungsstellen (bspw. EWSD). Dabei ist ein übergeordnetes Management-Tool an einem Bedienterminal für den Netzbetrieb vorgesehen. Durch das übergeordnete Management-Tool können Funktions-Profile in den jeweiligen Anwendungen (Applikationen) der unterschiedlichen Vermittlungsstellen abgerufen werden. Die Anwendungen (Applikationen) in den Management-Systemen unterschiedlichen Vermittlungsstellen setzen dann die Verwaltungsdaten gemäß dem aufgerufenen Funktions-Profil in die entsprechende Kommandosprache (beispielsweise MML oder Q3) um, die für die jeweilige Vermittlungsstelle zur Programmierung erforderlich ist.

Es wird also zwischen den eigentlichen Vermittlungsstellen und dem übergeordneten Management-Tool eine Anwendung (Applikation) zwischengeschaltet, die im wesentlichen die Funktion eines Profileditors zur Erstellung von Funktionsprofilen und zur Umsetzung der Verwaltungsdaten gemäß dem aufgerufenen Funktions-Profil in die jeweilige Kommandosprache hat.

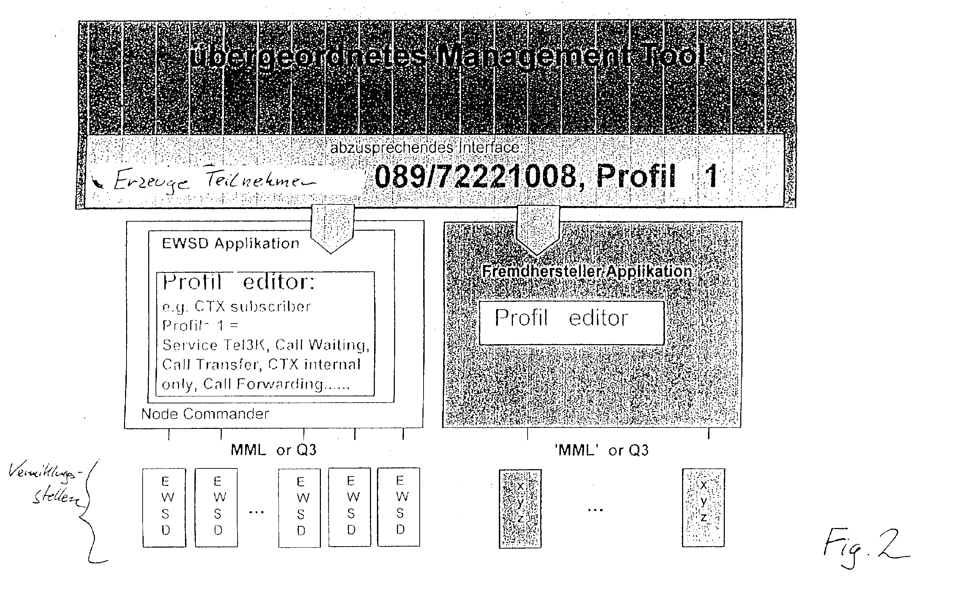

Figur 2 zeigt ein Beispiel für die Umsetzung eines aufgerufenen Profils durch einen Profileditor. Der Profileditor ist Bestandteil einer den entsprechenden Vermittlungsstellen zugeordneten Anwendung (Applikation). Gemäß dem Beispiel soll ein Teilnehmer mit der Anschlußkennung 089/72221008 erzeugt werden, dem das Profil 1 bezüglich der eingangs genannten ergänzenden Leistungsmerkmale zugeordnet werden soll.

Dabei sind durch das übergeordnete Management-Tool mehrere Profile aufrufbar und zuweisbar, wobei jedes Profil aus einer Gruppe von beispielsweise vorbestimmten ergänzenden Leistungsmerkmalen besteht. Gemäß dem Beispiel von Figur 2 wird dem zu erzeugenden Teilnehmeranschluß mit der Kennung 089/72221008 beispielsweise eine Anrufumlenkung ("call forwarding"), der weitere Dienst Anklopfen ("call waiting") sowie Rufweiterleitung ("call transfer") etc. zugewiesen. Der Profileditor setzt diese Verwaltungsdaten entsprechend dem ausgewählten Profil in die jeweiligen Kommandosprachen der durch den Betreiber verwendeten Vermittlungsstellen um.

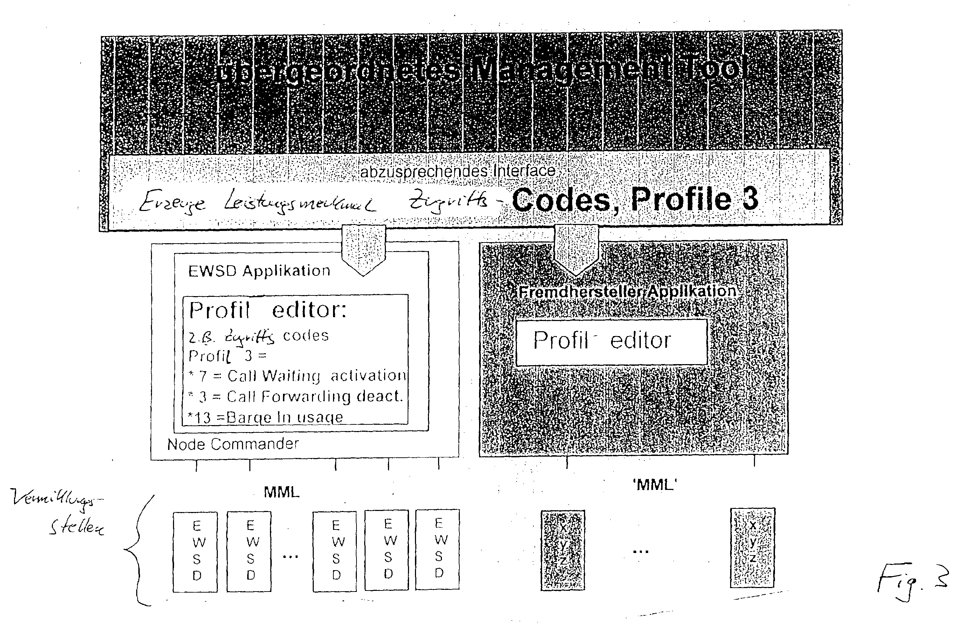

Figur 3 zeigt ein Beispiel, wie durch das übergeordnete Management-Tool mittels eines Profileditors Leistungsmerkmal-Zugriffcodes erzeugt werden können.

Die Funktionsprofile bieten somit die Möglichkeit, auch ohne Q3-Normierung (Standardisierung) in einfacher Weise herstellerübergreifende Funktionen durch Verwaltungsdaten zu koordinieren. Selbstverständlich läßt sich auch bei bestehender Q3-Normierung eine Vereinfachung erzielen.

Eine Koordinierung von Funktionen zwischen den einzelnen Herstellern erfolgt dabei als PC-PC-Schnittstelle (CORBA oder DCOM) auf Funktions-Profilebene. Die Schnittstellenabsprache ist nur bezüglich einiger weniger Adressparameter sowie bezüglich der Profilnamen erforderlich. Der Inhalt des Profils selbst wird vom Betreiber mit Funktions-Profileditoren festgelegt. Diese Funktions-Profileditoren können herstellerspezifisch gestaltet werden.

Somit müssen nur die einzelnen Hersteller selbst ihre detaillierte Kommandosyntax beherrschen, wohingegen der Benutzer des Bedienterminals mit dem übergeordneten Management-Tool diese einzelnen Kommandosprachen nicht beherrschen muß. Der Betreiber selbst kann den Inhalt der Funktionsprofile durch bedienerfreundliche, syntaxunabhängige Funktions-Profil-Editoren bestimmen. Selbst beim Einsatz von nur einem Hersteller bieten die Funktions-Profile die Möglichkeit der einfachen Verwaltung von komplexen Objekten (es wird ein objektorientierter Software-Entwicklungsansatz gewählt) durch die Verwendung des Funktions-Profil-Editors.

Durch die Erfindung ergeben sich eine Vielzahl von Vorteilen.

Die Absprache zwischen den unterschiedlichen Herstellern bezüglich der Schnittstelle (Interface) zur Verwaltung wird minimiert. Nur Profilnamen und einzelne wenige Adressparameter müssen abgestimmt werden. Gemäß dem Stand der Technik müssen pro Objekt ca. 100 einzelne Merkmale eine Abstimmung der detaillierten Kommandosyntax erfolgen. Somit wird der Aufwand für die Absprache minimiert und es kann ein Schnelligkeitsgewinn erzielt werden. Der Netzbetreiber wird unabhängig von der jeweiligen Kommandosprache der einzelnen Hersteller, so daß langwierige/kostenintensive Absprachen der Hersteller untereinander und mit Betreiber unnötig werden. Darüber hinaus ist die Unabhängigkeit von Schnittstellenänderungen in der Mensch-Maschinen-Sprache/Syntax der einzelnen Hersteller gewährleistet.

Der Inhalt der Funktions-Profile kann wie bereits gesagt vom Betreiber selbst mit den Funktions-Profil-Editoren der jeweiligen Hersteller-Anwendungen definiert werden. Dies bietet eine größtmögliche Unabhängigkeit von den einzelnen Herstellern.

Insbesondere bei ungleichen Leistungsmerkmalsinhalten (beispielsweise herstellerspezifische Zusatzmerkmale) kann der Betreiber selbst bestimmen, ob und wann die Funktionalität bereits nur für einen Hersteller angeboten wird.

Es ergibt sich eine sehr hohe Schnelligkeit bei der Veränderung von Funktions-Profil-Inhalten, da der Betreiber selbst den Inhalt der Funktions-Profile ändern kann. Ohne Änderung der Schnittstelle selbst können neue Leistungsmerkmale eingebracht werden. Eine aufwendige Korrektur in den Schnittstellen ist dabei nicht notwendig.

Es wird eine sogenannte High-Level-Schnittstelle verwendet, die für alle Objektgrößen verwendbar ist. Kleine (beispielsweise Teilnehmerverwaltung in einer Vermittlungsstelle) wie auch größere Objekte (beispielsweise netzweite CTX-Gruppen) können diese Funktions-Profile verwenden.

Somit ergibt sich insbesondere ein Vorteil bei der Anwendung auf Vermittlungsstellen mit übergreifenden Konstrukten wie beispielsweise bei Massengeschäft.

## Patentansprüche

1. Verfahren zur Verwaltung wenigstens einer Telekommunikations-Vermittlungsstelle, deren Funktion gemäß einer vorbestimmten Syntax programmierbar ist,
aufweisend die folgenden Schritte:
- Eingabe von Verwaltungsdaten, die wenigstens eine Funktion der Vermittlungsstelle anweisen, in ein Funktionsprofil eines Bedien-Terminals,
- Umsetzen der Verwaltungsdaten des Funktionsprofils in die Syntax der Vermittlungsstelle in einem Profileditor, um die Funktion der Vermitttlungsstelle entsprechend den Verwaltungsdaten zu programmieren.

2. Verfahren nach Anspruch 1,
dadurch gekennzeichnet,
daß der Profileditor in einem Management-System der Vermittlungsstelle vorgesehen ist.

3. Verfahren nach einem der Ansprüche 1 oder 2,
dadurch gekennzeichnet,
daß mehrere Vermittlungsstellen mit jeweils unterschiedlicher Syntax durch ein zentrales Bedienterminal einheitlich verwaltet werden.

4. Verfahren nach einem der vorhergehenden Ansprüche,
dadurch gekennzeichnet,
daß zwischen dem Bedienterminal und dem Profileditor eine Schnittstellenabsprache bezüglich Adressparametern und Profilnamen besteht.

5. Verfahren nach einem der vorhergehenden Ansprüche,
dadurch gekennzeichnet,
daß die Eingabe von Verwaltungsdaten jeweils mehrere Funktionen der Vermittlungsstelle beeinflußt.

6. System zur Verwaltung wenigstens einer Telekommunikations-Vermittlungsstelle, deren Funktion gemäß einer vorbestimmten Syntax programmierbar ist, aufweisend:
- ein Bedien-Terminal zur Eingabe von Verwaltungsdaten, die wenigstens eine Funktion der Vermittlungsstelle anweisen, mittels eines Funktionsprofil,
- einen Profileditor zum Umsetzen der Verwaltungsdaten des Funktionsprofils in die Syntax einer dem Profileditor zugeordneten Vermittlungsstelle, um die Funktion der Vermitttlungsstelle entsprechend den Verwaltungsdaten zu programmieren.

7. System nach Anspruch 6,
dadurch gekennzeichnet,
daß der Profileditor in einem Management-System der Vermittlungsstelle vorgesehen ist.

8. System nach einem der Ansprüche 6 oder 7,
dadurch gekennzeichnet,
daß einem zentralen Bedienterminal mehrere Vermittlungsstellen mit jeweils unterschiedlicher Syntax zugeordnet sind.

9. System nach einem der Ansprüche 6 bis 8,
dadurch gekennzeichnet,
daß zwischen dem Bedienterminal und dem Profileditor eine Schnittstelle zur Übergabe von Adressparametern und Profilnamen vorgesehen ist.

10. System nach einem der Ansprüche 6 bis 9,
dadurch gekennzeichnet,
daß in dem Profileditor mehrere auswählbare Profile abgespeichert sind, die jeweils durch eine Gruppe vorbestimmter Funktionen definiert sind und durch die Verwaltungsdaten aufrufbar sind.

11. System nach Anspruch 10,
dadurch gekennzeichnet,
daß die Funktionen teilnehmerbezogene ergänzende Dienste und Leistungsmerkmale enthalten.
